# EUROPÄISCHE PATENTANMELDUNG

(11) **EP 4 711 198 A1**
(43) Veröffentlichungstag der Anmeldung: **18.03.2026**
(21) Anmeldenummer: 25196423.5
(22) Anmeldetag: 18.08.2025
(51) Int. Cl.: B60N 2/14, B60N 2/30, B60N 2/38

(54) **MITNAHMESTAPLER**

(30) Priorität: 13.09.2024 AT 5012024 U
(71) Anmelder: Palfinger AG, 5101 Bergheim bei Salzburg (AT)
(72) Erfinder: Lechner, Michael, 5101 Bergheim bei Salzburg (AT); Haslauer, Mario, 5101 Bergheim bei Salzburg (AT)
(74) Vertreter: Torggler & Hofmann Patentanwälte - Innsbruck

(57) **Zusammenfassung**

Mitnahmestapler, mit:
- einer Kabine (1)
- einem Sitz (3) zur Verwendung durch einen sich in der Kabine (2) aufhaltenden Fahrer, wobei der Sitz (3) um eine horizontale Achse klappbar zwischen einer Transportstellung und einer Benutzungsstellung in der Kabine (2) angeordnet ist und der Sitz (3) in der Benutzungsstellung um eine vertikale Achse zwischen einer Zu- und Ausstiegsstellung und einer Arbeitsstellung schwenkbar angeordnet ist.

## Beschreibung

Die Offenbarung betrifft einen Mitnahmestapler mit den Merkmalen des Oberbegriffs des Anspruchs 1 und eine Anordnung aus einem solchen Mitnahmestapler und einem LKW.

Ein solcher Mitnahmestapler ist in EP 3 450 386 A1 gezeigt.

Im Stand der Technik ist problematisch, dass durch die erforderliche relativ große Länge der Kabine während eines Transportes des Mitnahmestaplers durch einen LKW eine relativ große Gesamtlänge der Anordnung aus LKW und Mitnahmestapler gegeben ist.

Es ist eine Aufgabe, einen Gabelstapler bereitzustellen, bei welchem eine geringere Gesamtlänge der Anordnung aus LKW und Mitnahmestapler gegeben ist.

Diese Aufgabe wird gelöst durch einen Mitnahmestapler mit den Merkmalen des Anspruchs 1 und eine Anordnung aus einem LKW und einem solchen Mitnahmestapler.

Ein solcher Mitnahmestapler weist eine Kabine auf, in welcher ein Sitz zur Verwendung durch einen sich in der Kabine aufhaltenden Fahrer angeordnet ist. Der Sitz ist um eine horizontale Achse klappbar zwischen einer Transportstellung und einer Benutzungsstellung in der Kabine angeordnet und ist in der Benutzungsstellung um eine vertikale Achse zwischen einer Zu- und Ausstiegsstellung und einer Arbeitsstellung schwenkbar angeordnet. In der Benutzungsstellung kann der Sitz über die Kabine nach hinten hinausragen, da die Kabine verkürzt ausgeführt sein kann. In der Transportstellung wird der Sitz weiter (ggf. vollständig) in die Kabine hinein geklappt.

Das Vorsehen der Klappbarkeit um eine horizontale Achse gestattet in der Transportstellung, den Überhang am LWK durch Reduktion der Gesamtlänge des Mitnahmestaplers zu reduzieren, da die Kabine verkürzt ausgebildet sein kann und verringert so die Gesamtlänge der Anordnung aus LKW und Mitnahmestapler. Außerdem ergibt sich während des Transports ein Witterungsschutz einer Sitzfläche des Sitzes.

Vorteilhafte Ausführungsformen sind in den abhängigen Ansprüchen definiert.

Unter LKW kann ein einzelner Lastkraftwagen oder ein Gespann aus einem Zugfahrzeug und einem Anhänger verstanden werden.

In einer Ausführungsform ist vorgesehen, dass der Sitz in der Benutzungsstellung um eine vertikale Achse zwischen einer Zu- und Ausstiegsstellung und einer Arbeitsstellung schwenkbar angeordnet ist. Dies gestattet einen anatomisch optimimerten Zustieg und den Ausstieg, da sich der Sitz um die vertikale Achse verschwenkt mit der Sitzfläche in Richtung einer seitlichen Öffnung der Fahrerkabine befinden kann.

In einer Ausführungsform ist vorgesehen, dass der Sitz über eine Konsole mit der Kabine verbunden ist.

In einer Ausführungsform ist vorgesehen, dass die vertikale Achse in der Konsole ausgebildet ist.

In einer Ausführungsform ist vorgesehen, dass der Sitz mit einer sich mit dem Sitz mitbewegenden Sicherheitsvorrichtung versehen ist, beispielsweise in Form eines Bügels wie in EP 3 450 386 A1 gezeigt.

In einer Ausführungsform ist vorgesehen, dass die Konsole eine Wartungsöffnung zum Zugriff auf Verschleißteile aufweist. Eine Demontage des Sitzes ist somit nicht erforderlich.

In einer Ausführungsform ist vorgesehen, dass zwischen Sitz und Konsole eine Hebehilfe angeordnet ist und eine Transportsicherung zum Arretieren der Hebehilfe in der Transportstellung vorgesehen ist. Dadurch wird die Hebehilfe während des Transports und den damit zusammenhängenden äußeren Einflüssen an einem LKW geschont. Es kann vorgesehen sein, dass die Hebehilfe ohne Zutun eines Bedieners in ihre obere Endlage bewegt und diese Position verriegelt wird.

In einer Ausführungsform ist vorgesehen, dass eine Verriegelungsvorrichtung zum Verriegeln des Sitzes in der Arbeitsstellung vorgesehen ist. Es kann vorgesehen sein, dass die Verrieglungsvorrichtung manuell entriegelt werden muss, aber bei Erreichen eines oberen Endanschlags automatisch einrastet und verriegelt.

In einer besonders bevorzugten Ausführungsform weist der Sitz drei verschiedene Stellungen auf:
- Eine Arbeitsstellung, in welcher der Sitz in Richtung einer Frontseite des Mitnahmestaplers um die vertikale Achse geschwenkt ist und so um die horizontale Achse geklappt ist, dass die Sitzfläche im Wesentlichen horizontal angeordnet ist.
- Eine Zu- und Ausstiegsstellung, in welcher der Sitz um die vertikale Achse in Richtung einer seitlichen Öffnung der Kabine geschwenkt ist und so um die horizontale Achse geklappt ist, dass die Sitzfläche im Wesentlichen horizontal angeordnet ist.
- Eine Transportstellung, in welcher der Sitz in Richtung einer seitlichen Öffnung der Kabine um die vertikale Achse geschwenkt ist und so um die horizontale Achse geklappt ist, dass die Sitzfläche in Richtung einer seitlichen Öffnung der Kabine schaut.

Ausführungsformen werden anhand der Figuren diskutiert.
Figur 1 zeigt eine Kabine eines nicht näher dargestellten Mitnahmestaplers (welcher an sich bekannt ist, vgl. z. B. Figur 1 der EP 3 450 386 A1).
Figur 2 und 3 zeigen die Kabine der Figur 1, wobei sich der Sitz jeweils in einer anderen Stellung befindet.
Figur 4 bis 7 zeigen den Sitz mit Konsole in Isolation in verschiedenen Stellungen.

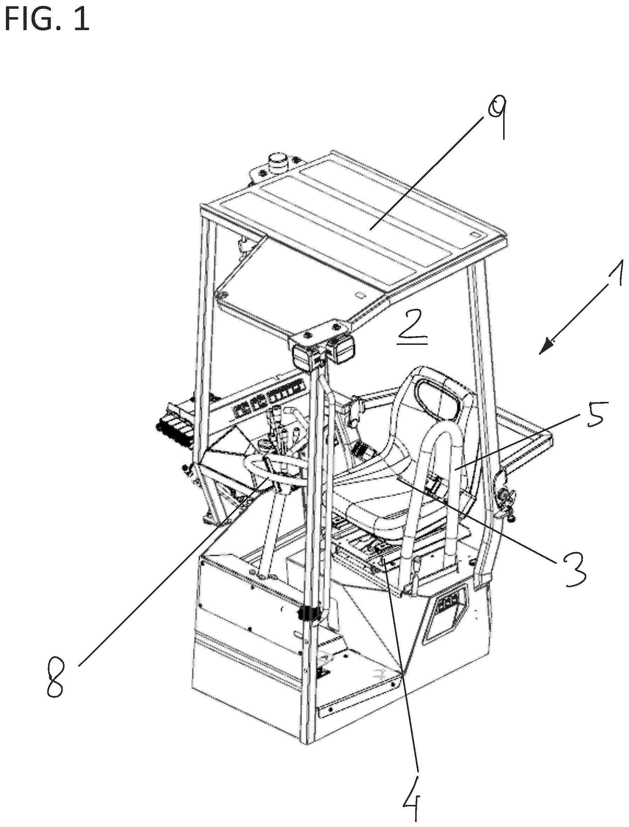

In Figur 1 erkennt man die Kabine 1 mit Innenraum 2, in welchem ein Sitz 3 angeordnet ist. Dieser weist eine Sicherheitsvorrichtung 5 auf und befindet sich in der Arbeitsstellung, in welcher ein Sitz 3 in einer Vorderrichtung (zum Lenkrad 8 hin) schaut. Der Sitz 3 ist über eine Konsole 4 in der Kabine 1 angeordnet.

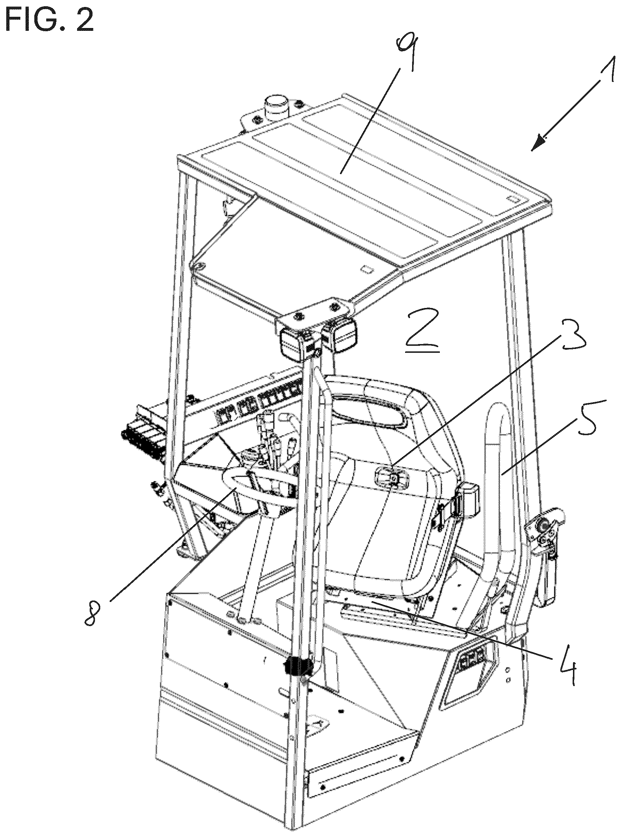

In Figur 2 wurde der Sitz 3 in die Transportstellung gebracht, in welcher der Sitz 3 in Richtung einer seitlichen Öffnung der Kabine 1 geschwenkt und nach vorne geklappt ist.

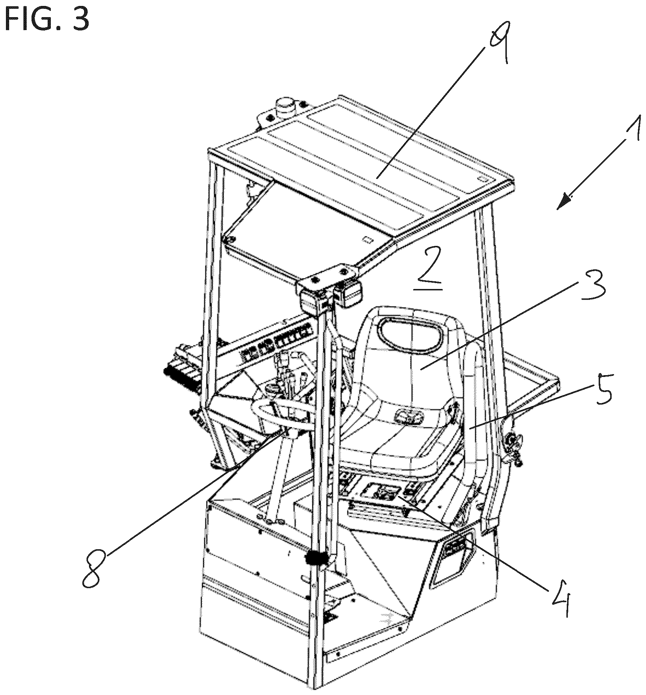

In Figur 3 wurde der Sitz 2 in die Zu- und Ausstiegsstellung gebracht, in welcher der Sitz 3 in Richtung einer seitlichen Öffnung der Kabine 1 geschwenkt und horizontal geklappt ist.

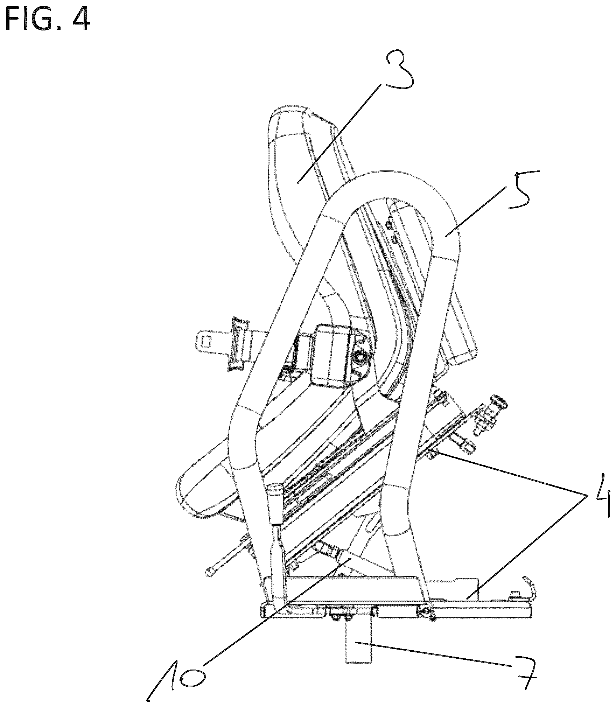

Figur 4 zeigt die Konsole 4 mit dem Sitz 3 in Isolation in jenem Zustand, in welchem der Sitz 3 nach vorne geklappt ist. Dort wird er beispielhaft durch eine Hebehilfe in Form einer Gasdruckfeder 10 gehalten. Die vertikale Achse zum Verschwenken ist teilweise im Zapfen 7 und teilweise in einer nicht erkennbaren Aufnahmeöffnung für den Zapfen 7 ausgebildet.

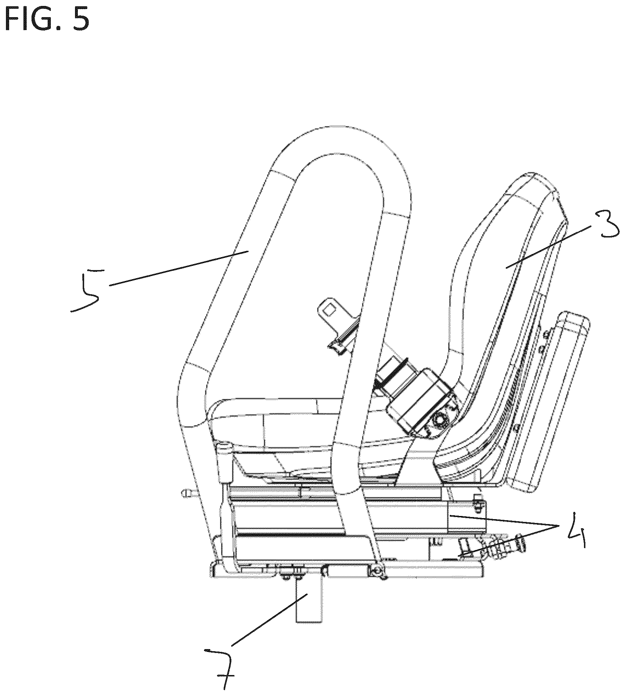

Figur 5 zeigt die Konsole 4 mit dem Sitz 3 in Isolation in jenem Zustand, in welchem der Sitz 3 horizontal geklappt ist.

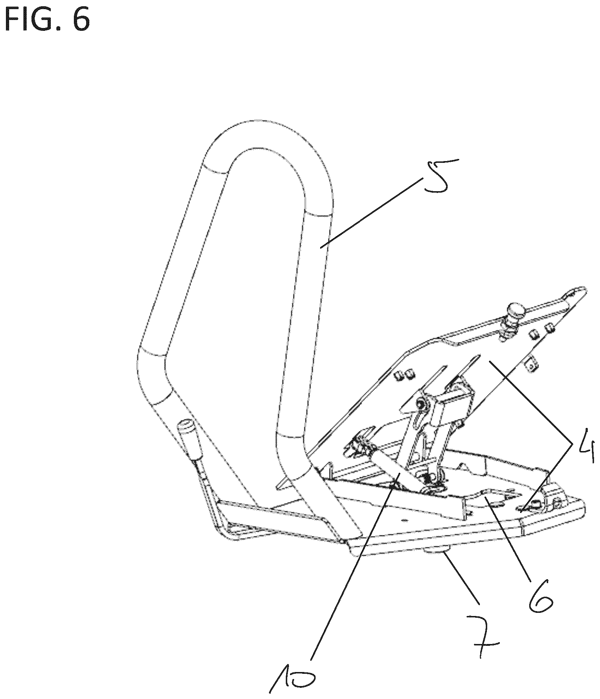

Figur 6 zeigt analog zur Figur 4 die Konsole 4 in Isolation, wobei eine Wartungsöffnung 6 in der Konsole 4 erkennbar ist.

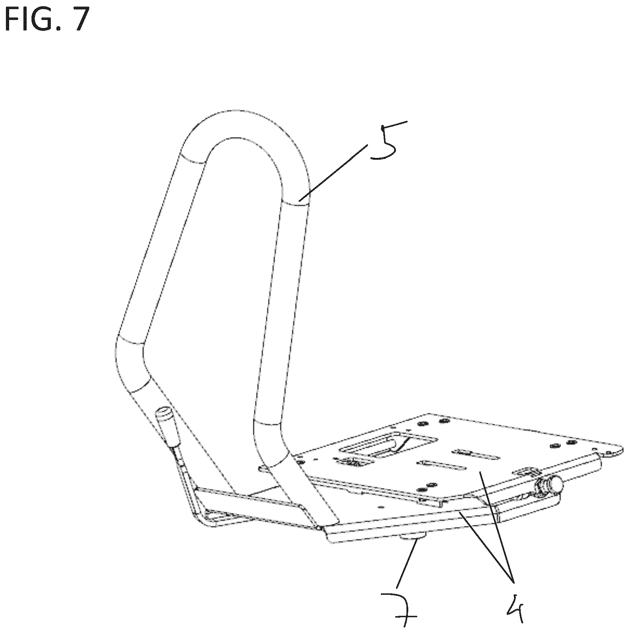

Figur 7 zeigt analog zur Figur 5 die Konsole 4 in Isolation.

### Bezugszeichen:

- 1: Kabine
- 2: Innenraum der Kabine
- 3: Sitz
- 4: Konsole
- 5: Sicherheitsvorrichtung
- 6: Wartungsöffnung in der Konsole
- 7: Zapfen
- 8: Lenkrad
- 9: Dach der Kabine
- 10: Gasdruckfeder

## Patentansprüche

1. Mitnahmestapler, mit:
- einer Kabine (1)
- einem Sitz (3) zur Verwendung durch einen sich in einem Innenraum (2) der Kabine (1) aufhaltenden Fahrer
**dadurch gekennzeichnet, dass** der Sitz (3) um eine horizontale Achse klappbar zwischen einer Transportstellung und einer Benutzungsstellung in der Kabine (1) angeordnet ist und der Sitz (3) in der Benutzungsstellung um eine vertikale Achse zwischen einer Zu- und Ausstiegsstellung und einer Arbeitsstellung schwenkbar angeordnet ist.

2. Mitnahmestapler nach dem vorangehenden Anspruch, wobei der Sitz (3) über eine Konsole (4) mit der Kabine (1) verbunden ist.

3. Mitnahmestapler nach den beiden vorangehenden Ansprüchen, wobei die vertikale Achse teilweise in der Konsole (4) ausgebildet ist, vorzugsweise in Form eines Zapfens (7).

4. Mitnahmestapler nach einem der beiden vorangehenden Ansprüche, wobei der Sitz (3) mit einer sich mit dem Sitz (3) mitbewegenden Sicherheitsvorrichtung (5) versehen ist.

5. Mitnahmestapler nach wenigstens einem der Ansprüche 2 bis 4, wobei die Konsole (4) eine Wartungsöffnung (6) zum Zugriff auf Verschleißteile aufweist.

6. Mitnahmestapler nach wenigstens einem der Ansprüche 2 bis 5, wobei zwischen Sitz (3) und Konsole (4) eine Hebehilfe, vorzugsweise Gasdruckfeder (10), angeordnet ist.

7. Mitnahmestapler nach dem vorangehenden Anspruch, wobei eine Transportsicherung zum Arretieren der Hebehilfe in der Transportstellung vorgesehen ist.

8. Mitnahmestapler nach wenigstens einem der vorangehenden Ansprüche, wobei eine Verriegelungsvorrichtung zum Verriegeln des Sitzes (3) in der Arbeitsstellung vorgesehen ist.

9. Anordnung aus einem LKW und einem Mitnahmestapler nach wenigstens einem der vorangehenden Ansprüche, wobei der Mitnahmestapler für den Transport am LKW angeordnet ist und sich der Sitz (3) in der Transportstellung befindet.
